(19) Europäisches Patentamt

European Patent Office

Office européen des brevets

(11) Veröffentlichungsnummer: **0 508 182 A2**

# (12) EUROPÄISCHE PATENTANMELDUNG

(21) Anmeldenummer: **92104859.1**

(22) Anmeldetag: **20.03.92**

(51) Int. Cl.5: **G01N 21/35**

(30) Priorität: **06.04.91 DE 4111187**

(43) Veröffentlichungstag der Anmeldung:
**14.10.92 Patentblatt 92/42**

(84) Benannte Vertragsstaaten:
**AT BE CH DE FR GB LI NL**

(71) Anmelder: **LFE LABORATORIUM FÜR INDUSTRIELLE FORSCHUNG GmbH & Co., ENTWICKLUNGS-KG**
**Henschelstrasse 3**
**W-6457 Maintal 1(DE)**

(72) Erfinder: **Brown, Gary D., Dipl.-Ing.**
**Wilhelm-Hauff-Strasse 1**
**W-6454 Bruchköbel(DE)**

(74) Vertreter: **Beil, Hans Chr., Dr. et al**
**Beil, Wolff und Beil, Rechtsanwälte**
**Adelonstrasse 58 Postfach 80 01 40**
**W-6230 Frankfurt am Main 80(DE)**

(54) **Verfahren zur Messung des optischen Absorptionsvermögens von Proben mit automatischer Korrekfur des Anzeigefehlers und Vorrichtung zur Durchführung des Verfahrens.**

(57) Die vorliegende Erfindung betrifft ein Verfahren zur Messung des optischen Absorptionsvermögens von Proben, insbesondere auf dem Gebiet der Gasanalyse mittels Infrarotstrahlung, durch Anwendung einer mehrfachen Lichtmodulation mittels Prüfsignal- und Meßsignal-Synchronisation, wobei eine automatische Fehlerkorrektur der Anzeige eines Zweistrahl-Absorptionsphotometers erfolgt. Die Erfindung betrifft ferner eine Vorrichtung zur Durchführung des Verfahrens.

EP 0 508 182 A2

Die vorliegende Erfindung betrifft ein Verfahren zur Messung des optischen Absorptionsvermögens von Proben, insbesondere auf dem Gebiet der Gasanalyse mittels Infrarotstrahlung, durch Anwendung einer mehrfachen Lichtmodulation mittels Prüfsignal- und Meßsignal-Synchronisation, wobei eine automatische Fehlerkorrektur der Anzeige eines Zweistrahl-Absorptionsphotometers erfolgt. Die Erfindung betrifft ferner eine Vorrichtung zur Durchführung des Verfahrens.

Eine weitverbreitete Methode zur Messung des optischen Absorptionsvermögens von Proben, insbesondere zur Konzentrationsbestimmung einer ausgewählten Gaskomponente eines Gasgemisches ist die selektive Absorption von Strahlung durch eine Gassäule. Oft wird aus der Differenzabsorption zweier Gassäulen auf die Differenzkonzentration geschlossen (Zweistrahl-Absorptionsphotometrie).

Bei Zweistrahl-Absorptionsphotometern kann man, je nach Anwendungsfall, deren Betrieb in 3 Bereiche unterteilen:

a) Absolutmessung (Referenzkonzentration Null):
Das Gasgemisch in der Referenzküvette enthält keinen Anteil an der strahlungsabsorbierenden Meßkomponente (Nullgas).
Das erhaltene Photometersignal entspricht dabei der Konzentration der jeweiligen Komponente in der Meßküvette. Dabei wird der Strahlungsfluß linear in ein elektrisches Signal umgesetzt, wobei durch überlagernde Störgrößen, wie z.B. Fremdlicht oder Temperatureinflüsse oder etwa Alterungseffekte, Fehler entstehen, die auch die Empfindlichkeit des Photometers beeinflussen (vgl. auch H. Kronmüller, B. Zehner, Prinzipien der Prozeßmeßtechnik 2, 1980, S. 182-266).
b) Differenzmessung mit bekannter Referenzkonzentration:
Hierbei enthält die Referenzküvette einen zunächst nahezu konstanten Anteil der Meßkomponenten, welcher den Grundpegel darstellt. Die Meßküvette enthält einen Anteil, der um diesen Grundpegel schwanken kann. Das aus der Differenzabsorption entstehende Meßsignal ist somit ein Maß für die Konzentrationsschwankung der Meßkomponenten um den Grundpegel.
c) Differenzmessung mit variabler Referenzkonzentration:
Hierbei ist der Wert der Referenzkonzentration, anders als in dem unter b) geschilderten Fall, unbekannt und sollte sich nach Durchführung der Differenzmessung aufheben, d.h. im wesentlichen keinen Einfluß auf die Differenzmessung haben.

In der Praxis hat sich jedoch gezeigt, daß die Forderung nach einem konstanten Grundpegel nur näherungsweise bzw. gar nicht realisiert werden kann. Bedingt durch die Nichtlinearität des der Absorptions-Photometrie zugrundeliegenden Lambert-Beer'sche Absorptionsgesetzes ist die gemessene Differenzabsorption der zu bestimmenden Differenzkonzentration vom Grundpegel abhängig. Eine eindeutige Beziehung zwischen Differenzabsorption und Differenzkonzentration ist dadurch nicht mehr gewährleistet. Der hieraus resultierende Anzeigefehler kann je nach Größe der Grundpegelschwankung beträchtlich sein. Zur Eliminierung solcher Schwankungen in Abhängigkeit vom Grundpegel kann man bei höheren Ansprüchen an die Meßgenauigkeit einen zweiten Photometer einsetzen, mittels dessen Analysator der Grundpegel separat gemessen werden kann. Der finanzielle Mehraufwand eines zusätzlichen Analysators zuzüglich notwendiger Verrechnungselektronik schränkt jedoch die möglichen Anwendungsgebiete stark ein.

Neben diesem Anzeigefehler ist in der Praxis auch eine Abhängigkeit der Nullpunktsanzeige vom Grundpegel festzustellen, der von optischen Unsymmetrien im Photometersystem herrührt und als Gleichtaktfehler bezeichnet werden kann.

Darüberhinaus liegt neben dem Anzeigefehler und dem Nullpunktsfehler eine Langzeit-Empfindlichkeitsinstabilität gegenüber Effekten, wie z.B. Leistungsschwankungen der Strahlungsquelle oder Empfindlichkeitsschwankungen im Detektor und dessen nachfolgendem Vorverstärker aufgrund von Schwankungen der Umgebungstemperatur, vor.

In der DE-PS 26 14 181 wird zur Eliminierung der zuletzt genannten Störfaktoren ein Verfahren sowie eine Vorrichtung zur Durchführung desselben offenbart, durch das eine Langzeit-Empfindlichkeitsstabilität des Photometersystems erreicht wird. Hierbei erfolgt eine Lichtmodulation zur Trennung des eigentlichen Meßsignals von Störsignalen, wobei das Störsignal eine andere Frequenz als das Meßsignal besitzt. Dabei erfolgt durch ein geeignetes Programm am Umfang der zur Lichtmodulation eingesetzten Modulationsblende ein periodisches Wechseln des Analysators zwischen zwei Betriebsarten "Messen" und "Prufen", wie z.B. 1800-3600 Prüfungen pro Minute.

Während der Betriebsart "Messen" sieht der Strahlungsdetektor, ähnlich wie bei herkömmlichen Zweistrahlphotometern, abwechselnd die Strahlung, die die Meß- und Referenzküvetten durchläuft, und bildet hieraus das Differenzsignal, wobei die zunächst ermittelten Intensitäten in einem photoelektrischen Wandler (Detektor) in ein elektrisches Signal umgewandelt werden.

In der Betriebsart "Prüfen" wird durch eine hierzu abweichende Folge von Ein- und Ausblendungen der durch beide Küvetten laufenden Strahlung eine für die Photometeranordnung charakteristische Signalantwort erhalten. Dies erfolgt dadurch, daß während einer jeden Meßperiode sowohl die zu untersuchende als auch die Referenzprobe gleichzeitig jeweils mit Licht einer ersten bestimmten Intensität beaufschlagt und die von beiden Proben transmittierte Gesamtintensität in ein erstes elektrisches Kalibriersignal umgesetzt wird, weiterhin während jeder Meßperiode sowohl die zu untersuchende als auch die Referenzprobe gleichzeitig jeweils mit Licht einer zweiten bestimmten Intensität beaufschlagt und die von beiden Proben transmittierte Gesamtintensität in ein zweites elektrisches Kalibriersignal umgesetzt wird, die Differenz der beiden Kalibriersignale einer jeden Meßperiode durch Vergleich mit einem Sollwert und Regelung der Verstärkung der Kalibriersignale konstant gehalten wird, und die Verstärkung der Meß- und Referenzsignale einer jeden Meßperiode in der gleichen Weise geregelt wird wie die der zugehörigen Kalibriersignale.

Die auf diese Weise mittels einer geeigneten Elektronik (vgl. Absorptionsspektrometer, "Binos", Leybold-Hereaus bzw. Rosemount, entsprechend der DE-PS 26 14 181) durch Meßsignal- und Kalibriersignal-Synchronisation erhaltene Signalantwort (Prüfsignal) ist ein Maß für die Empfindlichkeit des Photometers, die als Kontrollgröße dient. Dadurch ist ein automatischer Abgleich der Gesamtempfindlichkeit des Analysators möglich. Somit kann sowohl der Einfluß von Intensitätsänderungen der Lichtquelle und von Änderungen der Empfindlichkeit des photoelektrischen Wandlers, des Verstärkungsgrades sowie durch zunehmende Verschmutzung der Meßküvette eliminiert werden. Ferner ist hierdurch eine Kontrollmessung zur Nullpunktsüberprüfung nur in wesentlich längeren Zeiträumen als bisher erforderlich.

Da bei den jeweiligen Messungen in einem linearisierten Bereich um den jeweiligen Grundpegel gemessen wird, der von der maximalen Konzentrationsdifferenz abhängt, muß jeweils erneut die bei Änderung des Grundpegels damit verbundene Empfindlichkeitsänderung des Analysators kompensiert werden. Mit anderen Worten, es ist immer dann eine erneute Kalibrierung des Differenzmeßbereichs erforderlich, wenn sich der Grundpegel wesentlich ändert.

Mit dem geschilderten Verfahren und der entsprechenden Vorrichtung ist es somit bislang noch nicht möglich, den beschriebenen Anzeigefehler aufgrund eines schwankenden Grundpegels bei Differenzmessungen automatisch zu korrigieren.

Der vorliegenden Erfindung liegt daher die Aufgabe zugrunde, ein Verfahren und eine Vorrichtung der oben beschriebenen Art bereitzustellen, durch das der Anzeigefehler aufgrund eines schwankenden Grundpegels automatisch ohne größere apparative Zusätze kostengünstig eliminiert werden kann.

Diese Aufgabe wird erfindungsgemäß durch das Verfahren gemäß Anspruch 1 sowie die Vorrichtung gemäß Anspruch 5 gelöst. Die Unteransprüche betreffen bevorzugte Ausgestaltungen.

Die Erfindung wird nachstehend anhand der Abbildungen 1-4 näher erläutert.

Dabei zeigt

Abb. 1    ein Photometersystem mit Meß- und Regelanordnung nach dem erfindungsgemäßen Verfahren;

Abb. 2    ein Diagramm der einzelnen Wechselsignale in den einzelnen Leitungen an den mit in eckigen Klammern stehenden Bezugszeichen bezeichneten Stellen;

Abb. 3    ein Blockdiagramm gemäß Abb. 1 mit bevorzugter Schaltung;

Abb. 4    eine beispielhafte Vorrichtung gemäß Blockdiagramm in Abb. 3.

Abb. 1

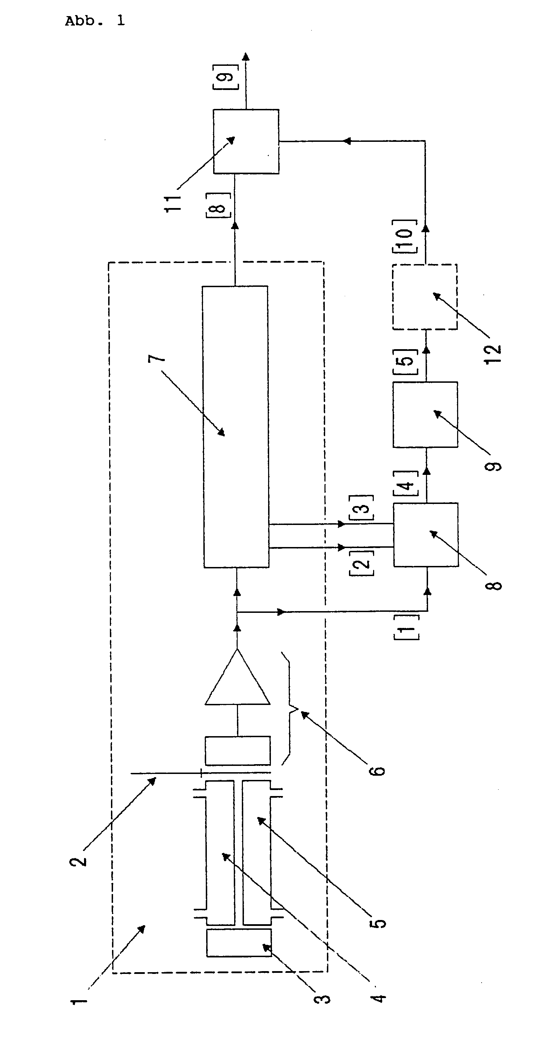

Wie in Abb. 1 dargestellt, kann die Methode und Vorrichtung gemäß der DE-PS 26 14 181 Ausgangspunkt für das erfindungsgemäße Verfahren sein. Die dort offenbarte Modulationstechnik sowie die entsprechenden Vorrichtungen zur elektronischen Auswertung der Meß- und Kalibriersignale sind somit Stand der Technik, der hierin vollständig einbezogen ist, und mit der Ziffer (1) gekennzeichnet. Sie umfaßt ein herkömmliches Photometersystem mit der Strahlungsquelle (3), welche bevorzugt ein Infrarotstrahler, wie z.B. ein Schwarzer Strahler (T ≈ 700°C), mit entsprechendem Reflektor ist. Dieser nachgeordnet sind die Meßküvette (5) sowie die Referenzküvette (4) und diesen nachfolgend das Strahlungsdetektor/Vorverstärkersystem (6), welches vorzugsweise dem in der DE-PS 26 14 181 beschriebenen entspricht. Es können jedoch auch andere geeignete bekannte Detektor/Verstärkersysteme, wie z.B. Halbleiterdetektoren oder Gasdetektoren, eingesetzt werden.

Die aus der Meß- und Referenzküvette erhaltenen Strahlungsflüsse werden dabei zunächst mit Hilfe einer geeigneten Modulationsblende (2) moduliert und in einem photoelektrischen Wandler (6) in ein elektrisches Detektorsignal [1] umgewandelt. Anschließend erfolgt in der Signalverarbeitungselektronik (7) die Trennung des mittels der Modulation erhaltenen Prüfsignals (P) vom Meßsignal (M), wobei ein Demultiplexer eingesetzt wird. Das ermittelte Prüfsignal (P) wird mit einem Sollwert verglichen und steuert die Verstärkung des Detektorsignals [1] und somit auch des eigentlichen Meß- oder Differenzsignals (M). Somit ist Signal (M) empfindlichkeitsgeregelt. In einem nächsten Schritt wird das Meßsignal (M) demoduliert und man erhält nach Integration das Meßsignal [8]. Die Integration kann dabei mittels eines Tiefpaßfilters oder eines Mikroprozessors für numerische Integration vorgenommen werden.

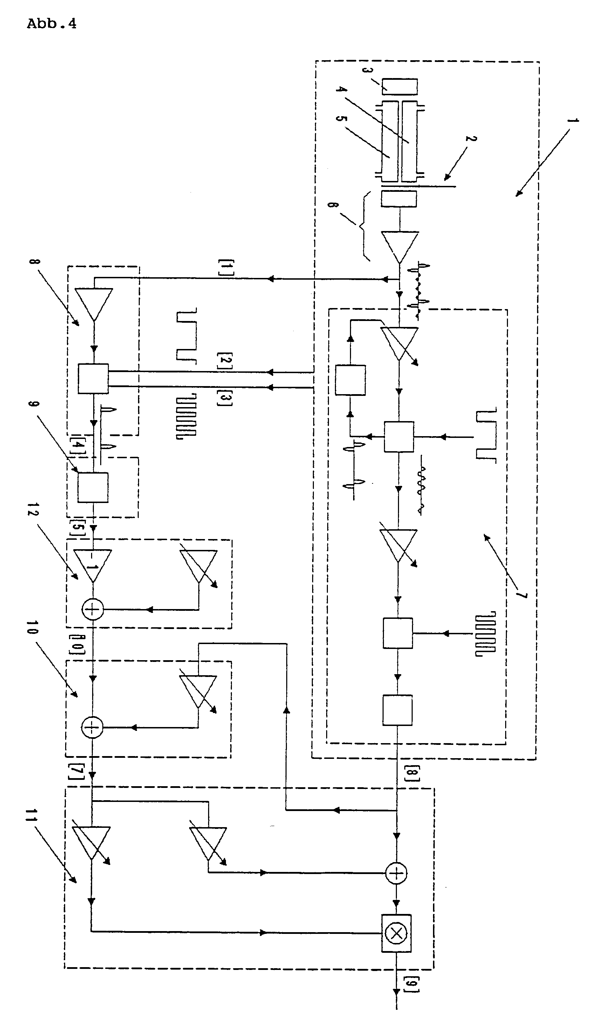

Die Modulation erfolgt wie erwähnt durch Beaufschlagung des Strahlungsdetektors mit unterschiedlichen Proben- und Referenzsignalen mittels eines geeigneten Programms (vgl. DE-PS 26 14 181), deren Differenz das Prüfsignal (P) ergibt. Die zur Prüfsignal- und Meßsignalsynchronisation sowie zur Meßbereichseinstellung geeigneten Mittel, wie Verstärker, Demultiplexer, phasenempfindlicher Gleichrichter und Tiefpaßfilter, sind bekannt und in der nachstehend beschriebenen Abb. 4 genauer dargestellt.

Neben diesem Verfahren gemäß der DE-PS 26 14 181 ist es jedoch auch möglich und vorteilhaft, die Lichtmodulation mittels eines geeigneten Programms vor Eintritt in die Meß- bzw. Referenzküvette vorzunehmen. Hierbei wird der Lichtquelle direkt ein geeignetes Programm (Modulationsblende) zugeordnet, das die Kalibriersignale erzeugt, so daß auch hier eine Meß- und Prüfsignalsynchronisation vorgenommen wird. Anschließend wird das modulierte Differenzsignal im Verstärkersystem (6) in das entsprechende Detektorsignal [1] umgewandelt. Die Weiterverarbeitung kann sodann wie geschildert mittels Vorrichtung (7) erfolgen. Dem analog wie oben beschrieben erhaltenen Meßsignal [8] haftet jedoch ein Anzeigefehler an.

Erfindungsgemäß erfolgt nun eine Korrektur desselben durch eine Zerlegung des zeitlichen Detektorsignalverlaufs mit einer weiteren Meß- und Prüfsignalsynchronisation in der folgenden Weise:

Das nicht amplitudengeregelte Detektorsignal [1] wird mittels eines dem obengenannten Prüfsignal (P) synchronen Steuersignals [2] sowie mittels eines dem reinen Meßsignal (M) synchronen Steuersignal [3] vorzugsweise in einer Demultiplexerstufe zerlegt. Diese Zerlegung erfolgt in der Vorrichtung (8) und bewirkt eine Trennung des 1. Prüfpeaks des Prüfsignals (P) vom Detektorsignal [1]. Eine hierfür geeignete Vorrichtung ist wiederum ein Demultiplexer.

Durch diese Vorgehensweise wird der 1. Prüfpeak (= der positive Ast) des Prüfsignals (P) aus dem Detektorsignal [1] ausgeblendet. Überraschenderweise zeigte sich, daß die nachfolgende Korrektur des Meßsignals [8] mit der Abweichung dieses Wertes des 1. Prüfpeaks von einem Referenzwert zu einer Korrektur des Anzeigefehlers führt. Denn der Wert des 1. Prüfpeaks, der als Korrektursignal [4] verwendet wird, ist überwiegend für die Grundpegelkonzentration, d.h. die Konzentration der Referenzküvette, und somit auch für Schwankungen hiervon, repräsentativ. Die Integration des Korrektursignals [4] erfolgt in der Vorrichtung (9), beispielsweise mittels eines Tiefpaßfilters. Dabei wird eine für die Ansteuerung der Korrekturstufe (11) geeignete Meßgröße erhalten. In letzterer erfolgt schließlich die Korrektur des durch Grundpegelschwankungen mit einem Fehler behafteten Meßsignals [8] beispielsweise mittels gesteuerter Summierer und Multiplizierer. Dabei erhält man das um den Anzeigefehler korrigierte Meßsignal [9].

Gegebenenfalls kann es von Vorteil sein, vor der Korrektur des Meßsignals [8] das Korrektursignal [4] bzw. dessen integrierten Wert [5] zunächst in eine Inverter/Offsetstufe (12) zu leiten. Dadurch wird eine einer Grundpegeländerung angepaßte Größe erhalten, d.h. steigt der Grundpegel, erhöht sich auch der Wert des entsprechend erhaltenen Signals, das hier mit [10] bezeichnet ist. Das Signal [5] wird also invertiert und um einen festen Betrag angehoben. Vorzugsweise weist daher die Vorrichtung gemäß Abb. 1 einen Inverter/Summierer (12) auf, mittels dem die genannte Invertierung vorgenommen werden kann.

Abb.2

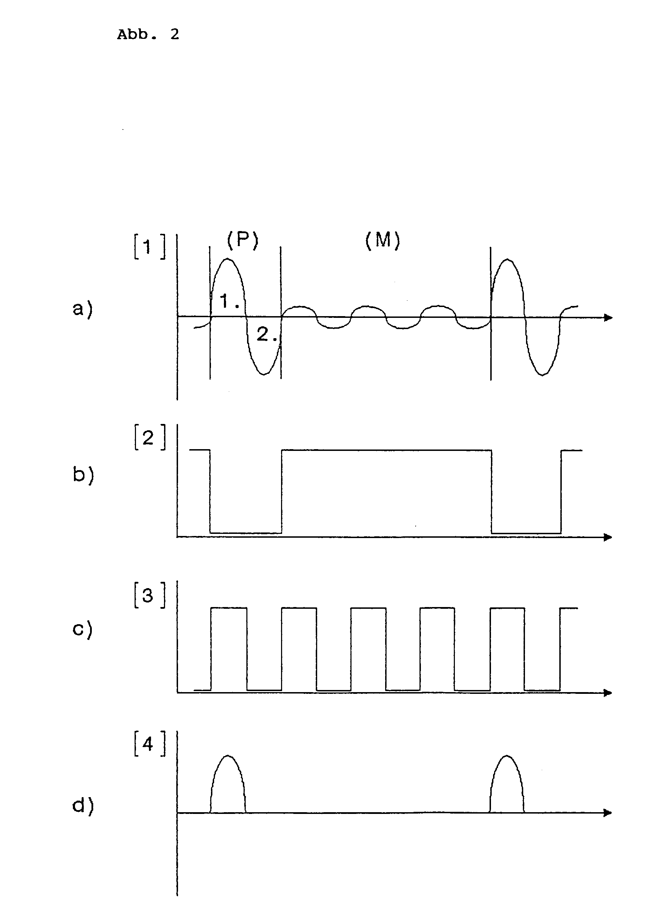

In Abb. 2 sind die der erfindungsgemäßen Korrektur entsprechenden Wechselsignale abgebildet.

Abbildung a) zeigt den Phasenverlauf des unkorrigierten Detektorsignals [1] nach Vorverstärkung und stellt in etwa eine Sinuswelle mit großer Amplitude (mit P gekennzeichnet) sowie eine mit kleiner Amplitude (mit M gekennzeichnet) dar. Der mit M gekennzeichnete Teil wird für die eigentliche Messung verwendet, der mit P gekennzeichnete Teil entspricht dem Prüfsignal. Der positive Ast (1.) ist repräsentativ für die Konzentration der Vergleichsküvette (4), der negative Ast (2.) für diejenige der Meßküvette (5).

Abbildung b) zeigt das mit dem Prüfsignal (P) synchrone Steuersignal [2], mittels dem das unkorrigierte Detektorsignal [1] zerlegt wird.

Abbildung c) zeigt das mit dem Meßsignal (M) synchrone Steuersignal [3], mit welchem das wie oben beschrieben aus dem Detektorsignal [1] abgetrennte Prüfsignal (P) weiter zerlegt wird. Dadurch wird, wie in Abb. d) der Abb.2 dargestellt, der positive Ast des Prüfsignals (P), der 1. Prüfpeak [4], separat ermittelt und als Signal [4] wie oben beschrieben integriert und als Korrektursignal [5] verwendet.

Abb. 3

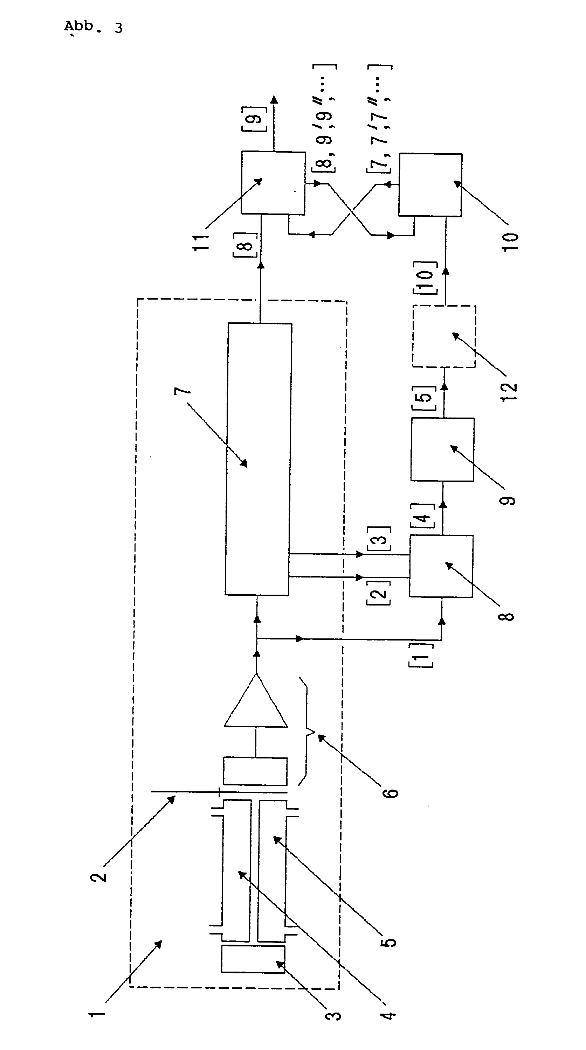

Gegebenenfalls kann das Korrektursignal [4] eine gewisse Abhängigkeit von der zu bestimmenden Differenzkonzentration zeigen.
Vorzugsweise kann es deshalb vorteilhaft sein, das Korrektursignal [5] mittels eines $\mu$-Prozessors oder ähnlicher geeigneter Vorrichtungen (10) in einer weiteren Korrekturstufe iterativ mit dem zu korrigierenden Differenzmeßsignal [8] zu ändern, wobei statt der in Abb. 1 gezeigten linear wirkenden diskreten Schaltung eine Schaltung höherer Ordnung, wie in Abb. 3 angedeutet, erfolgt. Das bedeutet, daß bei beispielsweise einfacher Näherung zunächst das Signal [5] bzw. bevorzugt [10] in Vorrichtung (10) mit Signal [8] zum Signal [7] korrigiert wird. Dieses Signal [7] wird anschließend verwendet, um Signal [8] zu korrigieren, wobei Signal [9'] erhalten wird, welches dann in oben beschriebenem Fall der einfachen Iteration dem erfindungsgemäß korrigierten Meßsignal [9] entspricht.

Für weitere iterative (n-fache) Korrekturen kann dann das Signal [9'] erneut zur Korrektur des Signals [5] bzw. [10] verwendet werden, wobei die entsprechenden Signale [9'',...] und [7', 7'', ...] durchlaufen werden (vgl. auch Abb. 3).

Durch diese bevorzugte Verfahrensweise wird somit eine iterative Korrektur des Signals [5] bzw. [10] mit dem zu korrigierenden Meßsignal [8] erzielt, die für besonders hohe Genauigkeitsanforderungen geeignet ist. Dies kann insbesondere dann der Fall sein, wenn ein Übersprechen zwischen der Meß- und Referenzküvette erfolgt.

Abb.4

In Abb. 4 ist eine beispielhafte Ausgestaltung einer Vorrichtung gemäß Abb. 3 dargestellt, wie sie im erfindungsgemäßen Verfahren vorteilhafterweise eingesetzt werden kann. Dabei entspricht der in Rechteckform dargestellte Teil (1) einem bekannten Photometersystem gemäß der DE-PS 26 14 181, wie z.B. von der Firma Leybold-Hereaus - jetzt Rosemount - vertrieben. Dieser weist im wesentlichen eine Strahlungsquelle (3), eine Meßküvette (5) (Meßstrahlengang), Referenzküvette (4) (Referenzstrahlengang), eine rotierende Modulationsblende (2), wie z.B. gemäß der DE-PS 26 14 181 beschrieben,mit mindestens 4 unterschiedlichen Öffnungen zur gleichzeitigen Bereitstellung von Licht unterschiedlicher Intensität, einen Vorverstärker/Detektor (6) sowie einen geregelten Verstärker und eine Signalverarbeitungselektronik (7) mit phasenempfindlichem Gleichrichter, Tiefpaßfilter und Demultiplexer auf. Die Signalverarbeitungselektronik (7) ist nach o.g. Photometersystem bekannt und kann entsprechend variiert werden.

Die Modulationsblende oder das Programm (2) kann je nach Anforderungen an die Intensität des Lichtes geometrisch unterschiedlich beschaffen sein. Eine solche Vorrichtung kann sowohl hinter als auch insbesondere vor der Meß- bzw. Referenzküvette angeordnet sein. Wesentlich ist, daß das Verstärkersystem (6) ein moduliertes Detektorsignal [1] entsendet, welches sich aus einem für Kalibrierungszwecke geeigneten Prüfsignal (P) sowie dem eigentlichen Meß(oder Differenz)-signal (M) zusammensetzt, wobei beide voneinander getrennt und geregelt werden.

Erfindungsgemäß weist die neue Vorrichtung neben der vom Verstärker ausgehenden Regelschleife zur Erzeugung eines Drifteffekte kompensierenden Regelsignals für den Verstärker sowie der Regelschleife für die Erzeugung des amplitudengeregelten Meßsignals [8] einen Ausgang für eine weitere Schleife auf, die eine Vorrichtung (8) zur Zerlegung des Detektorsignals [1] mit den Steuersignalen [2] und [3], ferner eine Vorrichtung (9) zur Integration des Korrektursignals [4] zum Signal [5] sowie eine Vorrichtung (11) zur Korrektur des Meßsignals [8] mit dem Signal [5] umfaßt. Die iterative Korrektur des Signals [5] kann in der beschriebenen Weise mittels Vorrichtung (10) zur Erzeugung des Korrektursignals [7] erfolgen.

Die Vorrichtungen (9) und (11) sind übliche hierfür eingesetzte Einrichtungen. Vorzugsweise umfaßt Vorrichtung (9) einen Tiefpaßfilter oder einen Mikroprozessor zur numerischen Integration. Als Vorrichtung (11) zur Korrektur des Meßsignals [8] finden vorzugsweise ein bzw. mehrere gesteuerte(r) Summierer und Multiplizierer Verwendung.

Die bevorzugt eingesetzte Vorrichtung (10) kann wiederum je nach Iterationsgrad einen oder mehrere Summierer sowie Multiplizierer umfassen.

Vorzugsweise kann die erfindungsgemäße Vorrichtung zwischen der Stufe (9) und (10) zusätzlich eine Inverter/Offsetstufe (12) - wie in Abb. 1 und 3 geschildert - enthalten.

Die Erfindung wird anhand der folgenden Beispiele näher erläutert.

Beispiel 1

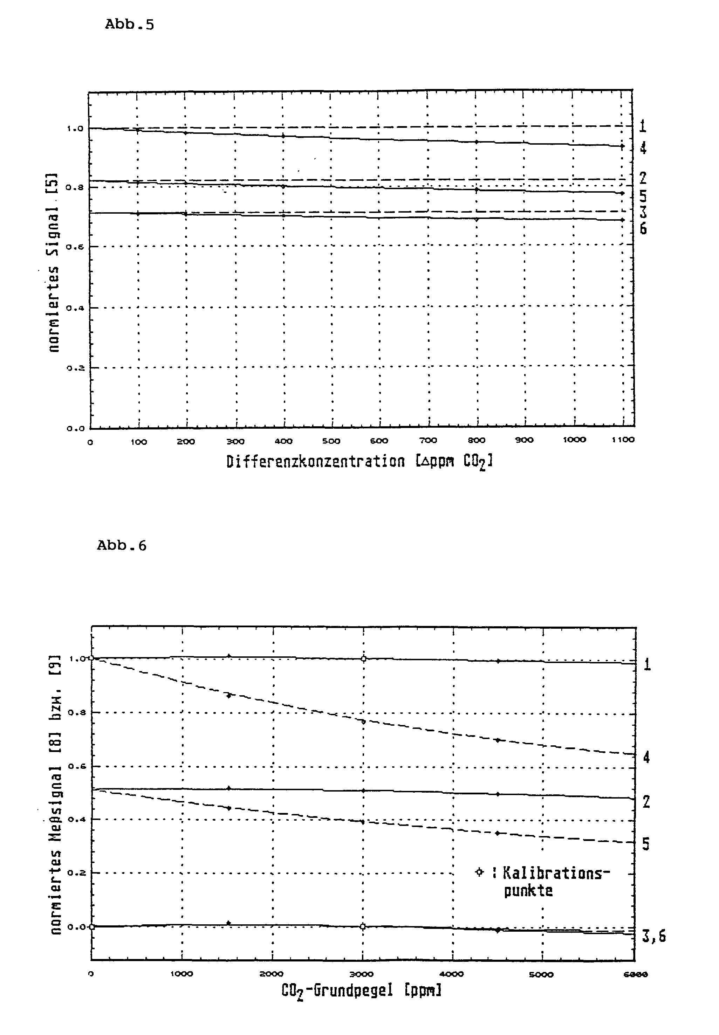

Messung des 1. Prüfpeaks in Abhängigkeit von der $CO_2$-Differenzkonzentration und des $CO_2$-Grundpegels (Abb. 5)

Anhand des beschriebenen Verfahrens und mittels der genannten Vorrichtung wird die Abhängigkeit des integrierten Signals [5] von der $CO_2$-Differenzkonzentration in Meß- und Referenzküvette sowie vom Grundpegel bestimmt (Küvettenlänge 200 mm). Dabei zeigen die gestrichelten Linien 1, 2 und 3 jeweils theoretische Werte für $CO_2$-Grundpegel-Konzentrationenvon 0, 400 bzw. 800 ppm. Die durchgezogenen Linien 4, 5 und 6 entsprechen den experimentell ermittelten Werten für $CO_2$-Grundpegel-Konzentrationen von 0, 400 und 800 ppm. Wie hieraus ersichtlich ist, wird experimentell ein an die theoretischen Werte deutlich angenäherter Kurvenverlauf erreicht. Dies zeigt, daß der 1. Prüfpeak des Prüfsignals (P) in erster Linie vom Grundpegel abhängig ist und erfindungsgemäß daher zur Korrektur des Anzeigefehlers des Meßsignals [8] zu verwenden ist.

Der Restfehler zwischen Theorie und Experiment, der insbesondere aufgrund des Übersprechens zwischen der Meß- und Referenzküvette auftreten kann, kann mittels einer bevorzugten Ausgestaltung der erfindungsgemäßen Vorrichtung gemäß Abb. 3 durch iterative Näherung beseitigt werden.

Beispiel 2 (Abb.6)

Ermittlung des Meßsignals [8] bzw. [9] in Abhängigkeit vom Grundpegel mit und ohne erfindungsgemäße Korrektur.

Abbildung 6 zeigt experimentelle Daten, die mit und ohne die erfindungsgemäße Korrektur (einfache Iteration) erhalten werden (Küvettenlänge 50 mm). Dabei bedeuten die Linien 1), 2) und 3) die Daten mit Korrektur und entsprechen dem Signal [9] gemäß Abb. 3, d.h. Korrektur des Signals [8] mittels Signal [7]. Die Linien 4) und 5) und 6) sind nicht korrigierte Werte gemäß Signal [8].

Wie hieraus deutlich ersichtlich ist, kann die bei bisherigen Messungen auftretende Abhängigkeit des Meßsignals in einem weiten Grundpegelbereich sowohl bei höherer ( ppm $CO_2$: 800 ppm, Linien 1) und 4)) als auch bei niedriger Differenzkonzentration ($\Delta$ppm $CO_2$: 400 ppm, Linien 2) und 5)) nahezu eliminiert werden.

Das erfindungsgemäße Verfahren sowie die entsprechende Vorrichtung eignen sich somit insbesondere zur Absorptionsmessung von einzelnen Komponenten eines Gasgemisches im IR-Bereich, insbesondere von $CO_2$, können aber auch zur Bestimmung der Konzentration anderer Zusammensetzungen, wie z.B: Flüssigkeiten im UV-Bereich, eingesetzt werden.
Dabei wird ein Genauigkeitsgrad erhalten, wie er sonst nur bei 2 unabhängigen Photometern erzielt werden kann.

**Patentansprüche**

1. Verfahren zur Messung des optischen Absorptionsvermögens von Proben mittels eines Detektorsignals [1], erhalten aus einem Proben- und einem Referenzsignal, und Lichtmodulation von Proben- und Referenzsignal durch Beaufschlagung mit Licht einer jeweils verschiedenen Intensität, Ermittlung der jeweiligen Gesamtintensität der so erhaltenen Kalibriersignale und Differenzbildung dieser zu einem Prüfsignal (P) und einem Meßsignal (M) sowie Vergleich dieses Signals (P) mit einem Sollwert und entsprechende Regelung der ursprünglich nicht geregelten Proben- und Referenzsignale unter Bildung eines empfindlichkeits- und amplitudengeregelten Meßsignals [8], dadurch gekennzeichnet,

daß man das Detektorsignal [1] mittels eines dem Prüfsignal (P) synchronen Steuersignals [2] sowie mittels eines dem Meßsignal (M) synchronen Steuersignals [3] zerlegt, den hieraus erhaltenen 1. Prüfpeak des Prüfsignals (P) als Signal [4] integriert und somit das Korrektursignal [5] erhält und nachfolgend das Meßsignal [8] um die Größe der Abweichung des erhaltenen integrierten Korrektursignals [5] vom Referenzwert korrigiert.

2. Verfahren gemäß Anspruch 1, dadurch gekennzeichnet, daß die Größe des Korrektursignals [5] in einer weiteren Stufe um die Größe des Meßsignals [8] vor dessen nachfolgender Korrektur zum Signal [7] korrigiert wird.

3. Verfahren gemäß einem der Ansprüche 1 oder 2, dadurch gekennzeichnet, daß das Korrektursignal [5] vor seiner Weiterverarbeitung invertiert und um einen festen Betrag angehoben wird.

4. Verfahren gemäß einem der Ansprüche 1 bis 3, dadurch gekennzeichnet, daß man die Absorption von Gasproben im Infrarotlichtbereich mißt.

5. Vorrichtung zur Durchführung des Verfahrens nach einem der Ansprüche 1 bis 4, umfassend:
eine Strahlungsquelle (3), eine Meßküvette (5) (Meßstrahlengang), Referenzküvette (4) (Referenzstrahlengang), eine Modulationsblende (2) zur gleichzeitigen Bereitstellung von Licht unterschiedlicher Intensität, einen Vorverstärker/Detektor (6), einen geregelten Verstärker sowie eine Signalverarbeitungselektronik (7) mit phasenempfindlichem Gleichrichter, Tiefpaßfilter und Demultiplexer, dadurch gekennzeichnet,
daß der Verstärker neben der von ihm ausgehenden Regelschleife zur Erzeugung eines Drifteffekte kompensierenden Regelsignals für den Verstärker und der Regelschleife für die Erzeugung eines amplitudengeregelten Meßsignals [8] Ausgänge für weitere Schleifen aufweist, enthaltend eine Vorrichtung (8) zur Zerlegung des Detektorsignals [1] mittels der Steuersignale [2] und [3], eine Vorrichtung (9) zur Integration des Signals [4] sowie eine Vorrichtung (11) zur Korrektur des Meßsignals [8] mit dem integrierten Korrektursignal [5].

6. Vorrichtung gemäß Anspruch 5, dadurch gekennzeichnet, daß die Vorrichtungen (8) und (9) einen Demultiplexer bzw. einen Tiefpaßfilter aufweisen.

**7.** Vorrichtung gemäß Anspruch 5 oder 6, dadurch gekennzeichnet, daß Vorrichtung (11) einen oder mehrere Summierer und Multiplizierer aufweist.

**8.** Vorrichtung gemäß einem der Ansprüche 5 bis 7, dadurch gekennzeichnet, daß zwischen der Vorrichtung (9) und (11) zusätzlich eine Vorrichtung (10), umfassend einen oder mehrere Summierer und Multiplizierer, zur iterativen Korrektur des Signals [5] angeordnet ist.

**9.** Vorrichtung gemäß einem der Ansprüche 5 bis 8, dadurch gekennzeichnet, daß zwischen Vorrichtung (9) und (11) ein Konverter (12) zur Inversion und Anhebung des Signals [5] angeordnet ist.

**10.** Vorrichtung gemäß einem der Ansprüche 5 bis 9, dadurch gekennzeichnet, daß die Modulationsblende (2) hinter der Meß- und Referenzküvette (4) bzw. (5) angeordnet ist.

**11.** Vorrichtung gemäß einem der Ansprüche 5 bis 9, dadurch gekennzeichnet, daß die Modulationsblende (2) vor der Meß- und Referenzküvette (4) bzw. (5) angeordnet ist.

Abb. 1

Abb. 2

a) [1] (P) (M)
1.
2.

b) [2]

c) [3]

d) [4]

Abb. 3

[9]

[8, 9', 9'', ...]

[7, 7', 7'', ...]

11 [8]

10

[10]

7

[5]

12

[3]

9

[4] [2]

8

[1]

2

6

1

5

3

4

Abb.4

Abb.5

Abb.6